# EUROPEAN PATENT APPLICATION

(11) **EP 4 733 771 A1**
(43) Date of publication of application: **29.04.2026**
(21) Application number: 25199440.6
(22) Date of filing: 01.09.2025
(51) Int. Cl.: G01P 1/00, G01P 15/13

(54) **ACCELEROMETER**

(30) Priority: 25.10.2024 JP 2024188453
(71) Applicant: Japan Aviation Electronics Industry, Limited, Tokyo 150-0043 (JP)
(72) Inventor: WAKAMOTO, Tatsuya, Shibuya-ku, Tokyo, 150-0043 (JP); MOTOKI, Hiroyuki, Shibuya-ku, Tokyo, 150-0043 (JP)
(74) Representative: MERH-IP Matias Erny Reichl Hoffmann Patentanwälte PartG mbB

(57) **Abstract**

An accelerometer includes a pendulum device, a pendulum stand, and a base. The pendulum device includes a pendulum and a pendulum supporter. The base has a thermal expansion coefficient larger than a thermal expansion coefficient of the pendulum stand, and the thermal expansion coefficient of the pendulum stand is larger than a thermal expansion coefficient of the pendulum device. An angle between a direction connecting two attachment points of the pendulum stand and the pendulum supporter and a direction connecting two attachment points of the base and the pendulum stand is greater than zero degrees.

## Description

### TECHNICAL FIELD

The present disclosure relates to an accelerometer where zero acceleration bias, or more specifically, a bias temperature coefficient, is reduced.

### BACKGROUND ART

Due to various factors, an actual accelerometer does not necessarily output zero [G] even when no acceleration to be measured exists. G is a unit of acceleration for which gravitational acceleration is used as a basis, and 1.0[G] = 9.80665[m/s²] holds. An output value [G] of an actual accelerometer when no acceleration to be measured exists will be referred to as a zero acceleration bias [G] for the sake of convenience. The zero acceleration bias [G] is generally dependent on temperature. The zero acceleration bias [G] per 1[K] is referred to as a bias temperature coefficient (unit: µG/K) (see Japan Aviation Electronics Industry, Ltd., "performance comparison of servo accelerometers", [online], [searched on April 17, 2025], Internet URL:https://www.jae.com/Motion_Sensor_Control/Accelerometer/detail/id=4 86; hereinafter referred to as Non-Patent Literature 1). K is a unit of thermodynamic temperature. The temperature may be indicated using the Celsius temperature scale instead of the Kelvin scale, for example. An example structure of a prior art accelerometer (see Japanese Patent Application Laid-Open No. 2002-168878; hereinafter referred to as Patent Literature 1) will be described later for convenience of description.

It can be seen from Non-Patent Literature 1 that an absolute value of the bias temperature coefficient of a prior art accelerometer art is several tens of µG/K to several hundreds of µG/K.

### BRIEF SUMMARY OF THE INVENTION

We disclose an accelerometer with a reduced bias temperature coefficient.

The technical matters described herein are not intended to limit the claimed invention either explicitly or implicitly, and are not intended to allow anyone other than those who benefit from the invention (for example, the applicant and the proprietors) to limit the claimed invention but are provided solely to facilitate understanding of the gist of the present invention. A summary of the invention from other aspects can be understood, for example, from the claims at the time of filing of this patent application.

A disclosed accelerometer includes a pendulum device, a pendulum stand, and a base. The pendulum device includes a pendulum and a pendulum supporter. The base has a thermal expansion coefficient larger than a thermal expansion coefficient of the pendulum stand, and the thermal expansion coefficient of the pendulum stand is larger than a thermal expansion coefficient of the pendulum device. An angle, which is formed by a direction between two points where the pendulum stand and the pendulum supporter are attached to each other and a direction between two points where the base and the pendulum stand are attached to each other, is greater than zero degrees.

These and other objects, features and advantages of the present invention will become apparent from the detailed description taken in conjunction with the accompanying drawings.

### EFFECTS OF THE INVENTION

The accelerometer of the present disclosure has a smaller bias temperature coefficient compared to the prior art.

### BRIEF DESCRIPTION OF THE DRAWINGS

The subject matter, which is regarded as the invention, is particularly pointed out and distinctly claimed in the claims at the conclusion of the specification. The present invention itself, and manner in which it may be made or used, if any, may be better understood after a review of the following description in connection with the accompanying drawings in which:
FIG. 1 is an external view of a three-axis accelerometer including a prior art accelerometer;
FIG. 2 is an exploded perspective view of the prior art accelerometer;
FIG. 3 is a diagram showing main structural elements of the prior art accelerometer, and more specifically, FIG. 3(a) is a plan view of a pendulum device, FIG. 3(b) is a plan view of a pendulum stand, and FIG. 3(c) is a plan view of a base;
FIG. 4 is a diagram showing an internal structure of the prior art accelerometer, and more specifically, FIG. 4(a) is a diagram showing a positional relationship between the pendulum device and the pendulum stand, FIG. 4(b) is a diagram showing a positional relationship between the pendulum stand and the base, and FIG. 4(c) is a diagram showing a positional relationship among the pendulum device, the pendulum stand, and the base;
FIG. 5 is an external view of a three-axis accelerometer including an accelerometer of an embodiment;
FIG. 6 is an exploded perspective view of the accelerometer of the embodiment;
FIG. 7 is a diagram showing main structural elements of the accelerometer of the embodiment, and more specifically, FIG. 7(a) is a plan view of a pendulum device, FIG. 7(b) is a plan view of a pendulum stand, and FIG. 7(c) is a plan view of a base;
FIG. 8 is a diagram showing an internal structure of the accelerometer of the embodiment, and more specifically, FIG. 8(a) is a diagram showing a positional relationship between the pendulum device and the pendulum stand, FIG. 8(b) is a diagram showing a positional relationship between the pendulum stand and the base, and FIG. 8(c) is a diagram showing a positional relationship among the pendulum device, the pendulum stand, and the base;
FIG. 9 is a graph showing a relationship between temperature and zero acceleration bias, in relation to each of the prior art accelerometer and the accelerometer of the embodiment;
FIG. 10 is a graph showing a relationship between an absolute value of a bias temperature coefficient and an angle between a direction connecting two attachment points of the pendulum stand and a pendulum supporter and a direction connecting two attachment points of the base and the pendulum stand;
FIG. 11 is a diagram showing an internal structure of an accelerometer of a first modification of the embodiment, and more specifically, FIG. 11(a) is a diagram showing a positional relationship between a pendulum device and a pendulum stand, FIG. 11(b) is a diagram showing a positional relationship between the pendulum stand and a base, and FIG. 11(c) is a diagram showing a positional relationship among the pendulum device, the pendulum stand, and the base;
FIG. 12 is a diagram showing an internal structure of an accelerometer of a second modification of the embodiment, and more specifically, FIG. 12(a) is a diagram showing a positional relationship between a pendulum device and a pendulum stand, FIG. 12(b) is a diagram showing a positional relationship between the pendulum stand and a base, and FIG. 12(c) is a diagram showing a positional relationship among the pendulum device, the pendulum stand, and the base; and
FIG. 13 is a diagram showing an internal structure of an accelerometer of a comparative example, and more specifically, FIG. 13(a) is a diagram showing a positional relationship between a pendulum device and a pendulum stand, FIG. 13(b) is a diagram showing a positional relationship between the pendulum stand and a base, and FIG. 13(c) is a diagram showing a positional relationship among the pendulum device, the pendulum stand, and the base.

### LIST OF REFERENCE NUMERALS

With regard to reference numerals used, the following numbering is used throughout the drawings.
- 100: three-axis accelerometer
- 100a: accelerometer
- 100b: accelerometer
- 100c: accelerometer
- 900: three-axis accelerometer
- 900a: accelerometer
- 900b: accelerometer
- 900c: accelerometer
- 910: pendulum device
- 911: pendulum
- 913: pendulum supporter
- 915: joint
- 919: symmetrical axis
- 920: pendulum stand
- 921: through hole
- 922: screw hole
- 930: base
- 931: through hole
- 932: screw hole
- 933: through hole
- 938: screw
- 939: screw
- 940: permanent magnet
- 950: pole piece
- 960a: torquer coil
- 960b: torquer coil
- 961a: bobbin
- 961b: bobbin
- 970: terminal
- 1000: housing

### DETAILED DESCRIPTION

First, a prior art accelerometer will be described, and then, an accelerometer of an embodiment will be described.

### <Prior Art Accelerometer >

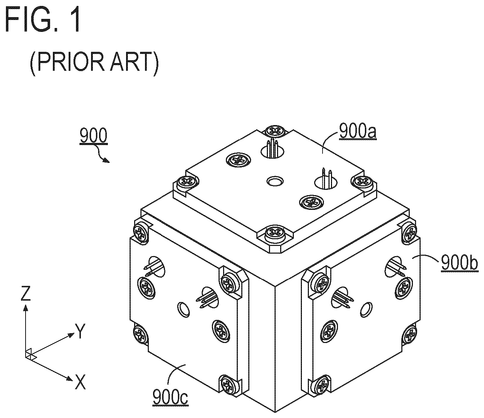

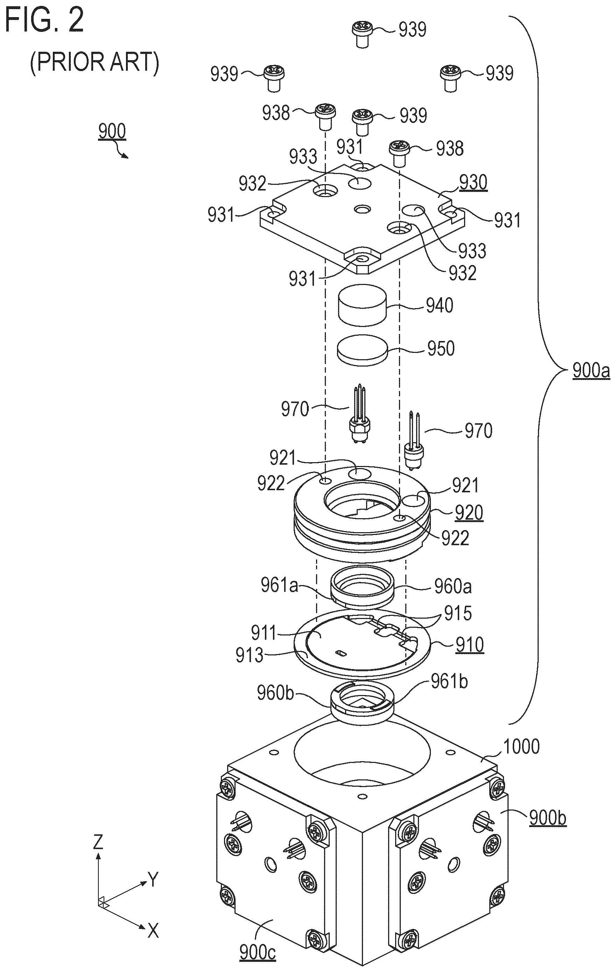

A prior art three-axis accelerometer 900 (see FIG. 1) includes three prior-art accelerometers 900a, 900b, 900c. FIG. 2 is an exploded perspective view of the accelerometer 900a among the three accelerometers 900a, 900b, 900c constituting the three-axis accelerometer 900 shown in FIG. 1. Structures of the remaining two accelerometers 900b, 900c among the three accelerometers 900a, 900b, 900c are the same as a structure of the accelerometer 900a, and thus, a description will be given of the structure of the accelerometer 900a.

The accelerometer 900a measures an acceleration by utilizing a change in a position of a pendulum responsive to an acceleration applied to the accelerometer 900a. A measurement principle is well known, and a detailed description thereof will be omitted. The accelerometer 900a of the present example measures the change in the position of the pendulum as a change in capacitance, but there are no restrictions on the method of measuring the change in the position of the pendulum. Examples of the method include a method of detecting the change in the position of the pendulum by, for example, using laser light or a low-coherence light source such as an LED, or by using magnetism of an MR element or the like. Moreover, the accelerometer 900a of the present example includes a servo mechanism. The servo mechanism generates torque to be applied to the pendulum, by causing current proportional to the change in the position of the pendulum to flow through a torquer coil that is located near a permanent magnet, and thus cancels the change in the position of the pendulum.

The accelerometer 900a includes, as main structural elements, a pendulum device 910 comprised of a single component, a pendulum stand 920 comprised of a single component, a base 930 comprised of a single component, a permanent magnet 940, a pole piece 950, a first torquer coil 960a, and a second torquer coil 960b. The "single component" refers to an object that cannot be divided into multiple pieces.

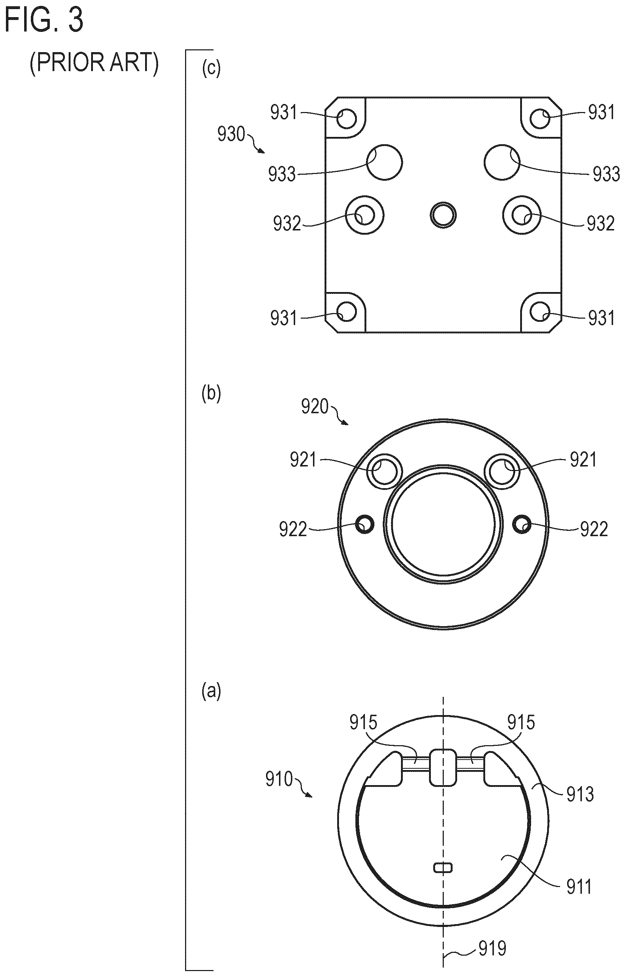

The pendulum device 910 (see FIG. 2, FIG. 3(a)) includes a pendulum 911, and a pendulum supporter 913 connected to the pendulum 911. The pendulum device has a structure in which the pendulum 911 is swingable around a junction, which serves as a fixed fulcrum, where the pendulum 911 is connected to the pendulum supporter 913. In the present example, more specifically, the pendulum device 910 includes the pendulum supporter 913 with an annulus shape, the pendulum 911 positioned inside the pendulum supporter 913 and shaped by a major arc (an arc with a central angle of 180 degrees or more) of a circle and a chord connecting both endpoints of the major arc, and two joints 915 that connect the pendulum 911 to the pendulum supporter 913. These components-the pendulum 911, the pendulum supporter 913, and the two joints 915-are formed integrally. The pendulum device 910 can be manufactured by laser-cutting thin, disc-shaped quartz glass (or more specifically, glass made from quartz, a mineral formed through the crystallization of silicon dioxide). The pendulum device 910 has a line-symmetric shape in relation to a symmetrical axis 919 passing between the two joints 915. Since each joint 915 is formed through chemical thinning etching, the pendulum 911 is swingable like a cantilever, with the joints 915 serving as fixed fulcrums.

A bobbin 961a, around which the first torquer coil 960a is wound, is adhered to one surface of the pendulum 911. A bobbin 961b, around which the second torquer coil 960b is wound, is adhered to the other surface of the pendulum 911. Structure and size of the bobbin 961b around which the second torquer coil 960b is wound are the same as structure and size of the bobbin 961a around which the first torquer coil 960a is wound. The bobbin 961a around which the first torquer coil 960a is wound and the bobbin 961b around which the second torquer coil 960b is wound are symmetrically arranged across the pendulum 911. In the present example, the bobbin 961b around which the second torquer coil 960b is wound is attached to the pendulum 911 to optimize a weight balance of the pendulum 911 to which the bobbin 961a around which the first torquer coil 960a is wound is attached. Accordingly, it is not necessary to cause current to flow through the second torquer coil 960b, and from the standpoint of reduction in power consumption, current is desirably not caused to flow through the second torquer coil 960b. In the embodiment, current does not flow through the second torquer coil 960b.

A thin metal layer (not shown) with a predetermined wiring pattern is formed on at least one of the one surface and the other surface of the pendulum 911. The wiring pattern in the thin metal layer includes a first wiring pattern for supplying current to the first torquer coil 960a, and a second wiring pattern for an electrode detecting the change in the position of the pendulum 911 as a change in capacitance. There are no restrictions on the wiring pattern in the thin metal layer, and any known wiring pattern can be used. In FIG. 2, illustration of a terminal that connects the thin metal film to the first torquer coil 960a is omitted. The thin metal layer is electrically connected to two terminals 970. The two terminals 970 extend from the accelerometer 900a through two respective through holes 933 in the base 930 described later, and are connected to a control device (not shown) that controls a servo mechanism and calculates an acceleration on the basis of a change in capacitance.

The pendulum stand 920 (see FIG. 2, FIG. 3(b)) is part of a magnetic circuit through which the magnetic flux generated by the permanent magnet 940 flows. In the present example, the pendulum stand 920 has a cylindrical shape and is formed by cutting ferromagnetic columnar Fe-Ni36%, an alloy composed of iron, nickel, manganese, and carbon. The pendulum stand 920 is adhered to the pendulum supporter 913 at two points of the pendulum stand 920 in a manner not obstructing swinging of the pendulum 911. In this state, the bobbin 961a around which the first torquer coil 960a is wound is positioned inside the cylindrical pendulum stand 920. The pendulum stand 920 includes, in a peripheral wall thereof, two through holes 921 extending in an axial direction and two screw holes 922. The two terminal 970 are housed in the two through holes 921, respectively. There are no restrictions on positions of the two through holes 921.

The base 930 (see FIG. 2, FIG. 3(c)) is part of the magnetic circuit through which the magnetic flux generated by the permanent magnet 940 passes. In the present example, the base 930 is formed by cutting rectangular flat plate-shaped electromagnetic soft iron. One surface of the columnar permanent magnet 940 is adhered to one surface of the base 930, and the pole piece 950 that is circular plate-shaped soft iron is adhered to the other surface of the permanent magnet 940. The base 930 includes four through holes 931 at four corners thereof, two screw holes 932 at positions corresponding to the two screw holes 922 in the pendulum stand 920, and two through holes 933 at positions corresponding to the two through holes 921 in the pendulum stand 920. The base 930 is attached to the pendulum stand 920 by two screws 938 at two points of the two screw holes 932, and the base 930 and the pendulum device 910 are arranged opposite each other across the pendulum stand 920. In this state, the permanent magnet 940 and the pole piece 950 are positioned inside the cylindrical pendulum stand 920, and an axial center of the columnar permanent magnet 940 and an axial center of the first torquer coil 960a wound around the bobbin 961a are approximately coincident with each other. The base 930 on which the pendulum stand 920 and the pendulum device 910 are stacked in this order are attached to a housing 1000 by four screws 939 passing through the four through holes 931.

As can be understood from the examples of materials described above, generally, the base 930 has a thermal expansion coefficient α_{β} larger than a thermal expansion coefficient α_{S} of the pendulum stand 920, and the thermal expansion coefficient α_{S} of the pendulum stand 920 is larger than a thermal expansion coefficient α_{P} of the pendulum device 910. That is, α_{P} < α_{S} < α_{B} is established.

In the three-axis accelerometer 900, the three accelerometers 900a, 900b, 900c are arranged along three orthogonal axes (that is, an X-axis, a Y-axis, and a Z-axis shown in FIGS. 1 and 2), respectively. A motion direction of a pendulum in the accelerometer 900a is a Z-axis direction, and the accelerometer 900a thus measures an acceleration in the Z-axis direction. A motion direction of a pendulum in the accelerometer 900b is an X-axis direction, and the accelerometer 900b thus measures an acceleration in the X-axis direction. A motion direction of a pendulum in the accelerometer 900c is a Y-axis direction, and the accelerometer 900c thus measures an acceleration in the Y-axis direction.

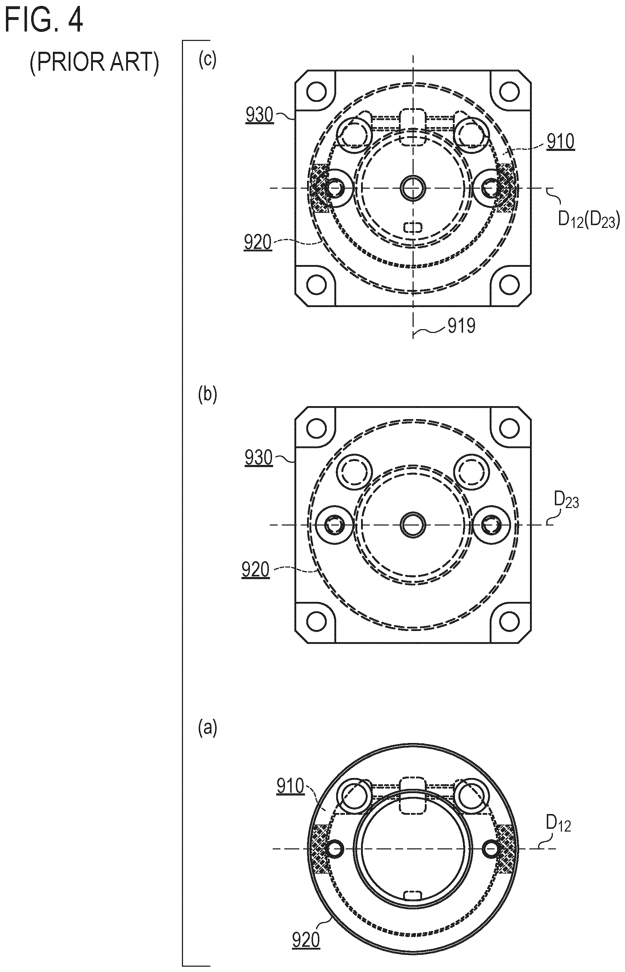

As described above, the pendulum stand 920 is attached to the pendulum supporter 913 with adhesive at two points of the pendulum stand 920. The two points (that is, the adhesive application areas) are positions, on the annular pendulum supporter 913, that are point-symmetrical with respect to the center of the pendulum supporter 913 (that is, the center of two concentric circles defining the annulus) and that are farthest from the joints 915 (see hatched parts in FIG. 4(a)). Previously, such positions were considered optimal to prevent stress generated in the pendulum supporter 913 from negatively impacting the pendulum 911. The stress results from contraction of the adhesive, differences in strain due to temperature changes in two objects of different materials (i.e., the pendulum supporter 913 and the pendulum stand 920) joined to each other with adhesive, and so on.

As described above, the base 930 is attached to the pendulum stand 920 at two points of the base 930 by the two screws 938. The two points (that is, positions of the two screw holes 922) are positions, on the peripheral wall of the cylindrical pendulum stand 920, corresponding to the above-mentioned two points of the adhesive application areas (see FIG. 4(b), FIG. 4(c)). Previously, such positions were considered optimal to prevent stress generated in the pendulum stand 920 from negatively impacting the pendulum supporter 913. The stress results from differences in strain due to temperature changes in two objects of different materials (i.e., the pendulum stand 920 and the base 930) joined to each other by the screws 938.

In this manner, an angle, which is formed by a direction D₁₂ between the two points where the pendulum stand 920 and the pendulum supporter 913 are attached to each other (that is, a direction in which the two points are joined by the shortest distance) and a direction D₂₃ between the two points where the base 930 and the pendulum stand 920 are attached to each other (that is, a direction in which the two points are joined by the shortest distance), is zero degrees. In the present example, the two points, where the pendulum stand 920 and the pendulum supporter 913 are attached to each other, are positions farthest from the symmetrical axis 919 of the pendulum device 910 in a direction orthogonal to the symmetrical axis 919, and the two points, where the base 930 and the pendulum stand 920 are attached to each other, are positions farthest from the symmetrical axis 919 of the pendulum device 910 in the direction orthogonal to the symmetrical axis 919.

An accelerometer having a structure where the angle formed by the direction D₁₂ and the direction D₂₃ is zero degrees is disclosed in Patent Literature 1 mentioned above, for example.

### <Accelerometer of Embodiment>

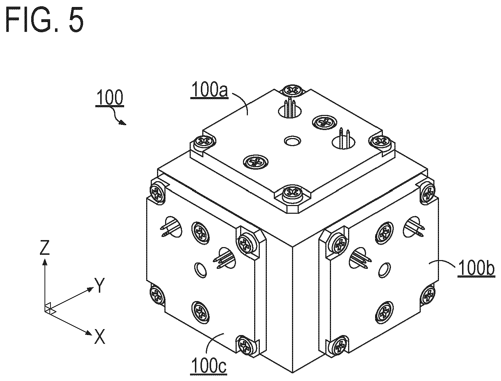

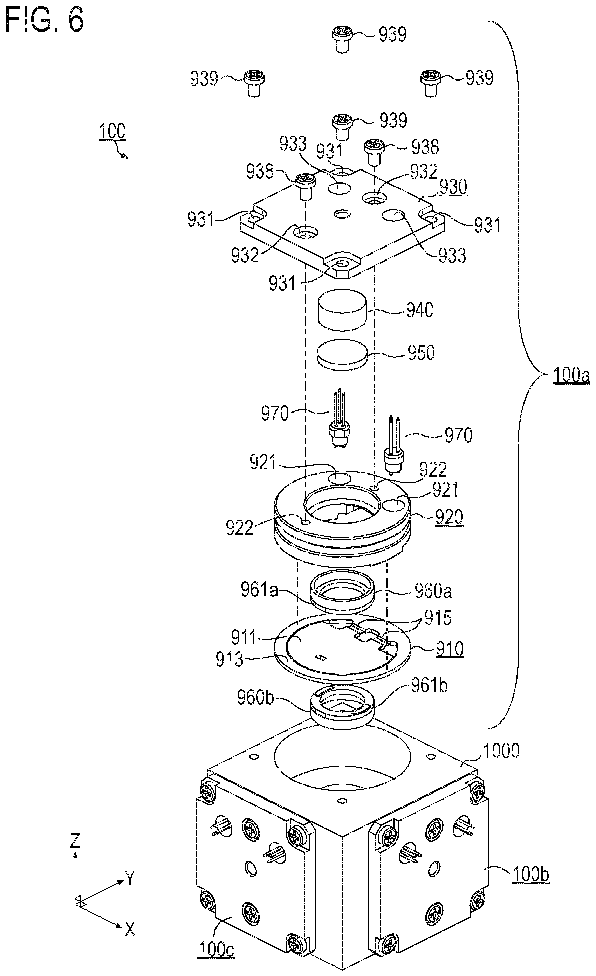

A three-axis accelerometer 100 (see FIG. 5) includes three accelerometers 100a, 100b, 100c of the embodiment. FIG. 6 is an exploded perspective view of the accelerometer 100a among the three accelerometers 100a, 100b, 100c constituting the three-axis accelerometer 100 shown in FIG. 5. Structures of the remaining two accelerometers 100b, 100c among the three accelerometers 100a, 100b, 100c are the same as the structure of the accelerometer 100a, and thus, a description will be given of the structure of the accelerometer 100a.

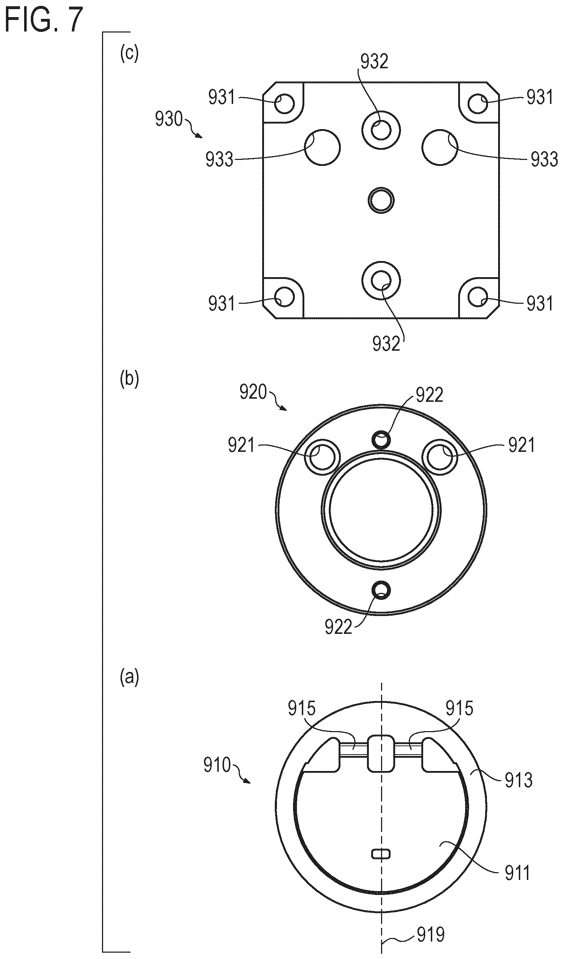

The accelerometer 100a of the embodiment has the same structure as the prior art accelerometer 900a except that positions where the base 930 and the pendulum stand 920 are fastened by the two screws 938 are different from the corresponding positions in the prior art accelerometer 900a (see FIGS. 5 to 8). Accordingly, a description will be given of a substantial difference between the embodiment and the prior art, and in relation to other technical matters, the description under the section of <Prior Art Accelerometer> will be applied mutatis mutandis to the description of the embodiment. Accordingly, the description under the section of <Prior Art Accelerometer> other than the substantial difference will be expressly incorporated herein mutatis mutandis. Reference numerals used in the description under the section of <Prior Art Accelerometer> will be assigned to structural elements of the accelerometer 100a of the embodiment having same structures and functions as the structural elements of the prior art accelerometer 900a.

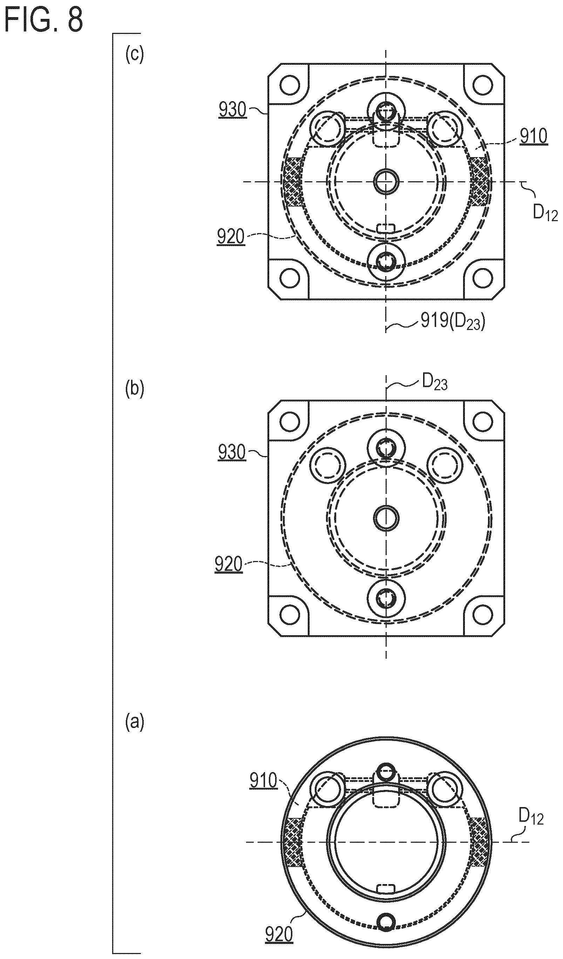

The base 930 is attached to the pendulum stand 920 at two points of the base 930 by the two screws 938. In the accelerometer 100a of the embodiment, the two points (that is, the positions of the two screw holes 922) are positions, on the peripheral wall of the cylindrical pendulum stand 920, that are point-symmetrical with respect to the center of the pendulum stand 920 and that do not correspond to the two points where the above-mentioned adhesive is applied. In the example shown in FIGS. 8(b) and 8(c), the positions of the two screw holes 922 are positions farthest from the two points where the adhesive is applied.

Accordingly, the angle, which is formed by the direction D₁₂ between the two points where the pendulum stand 920 and the pendulum supporter 913 are attached to each other and the direction D₂₃ between the two points where the base 930 and the pendulum stand 920 are attached to each other, is greater than zero degrees, and is 90 degrees in the present example. In other words, the direction D₁₂ between two junction points where the pendulum stand 920 and the pendulum supporter 913 that are joined to each other and the direction D₂₃ between two fastening points where the base 930 and the pendulum stand 920 that are fastened to each other are skew lines in three-dimensional geometry. As is well known, the angle between two skew lines is defined as follows: This angle is obtained by selecting an arbitrary point in space, shifting the two skew lines so that they pass through that point, and then applying the definition of the angle between two lines in plane geometry to the shifted lines.

### <Result of Experiment>

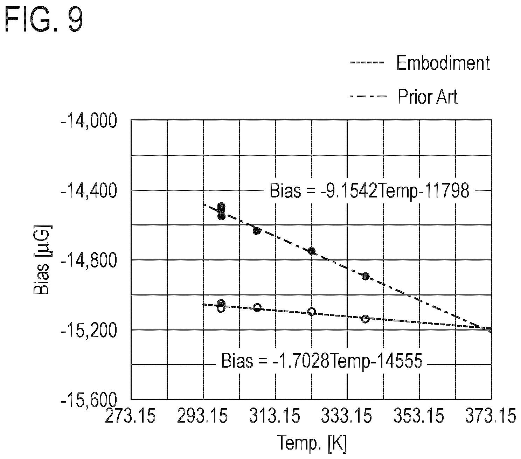

Measurement results of a relationship between temperature [K] and zero acceleration bias [µG] are shown in FIG. 9 for each of the accelerometer 100a of the embodiment and the prior art accelerometer 900a. In this experiment, a thermal expansion coefficient of the base 930 was 11.7[10⁻⁶/K], a thermal expansion coefficient of the pendulum stand 920 was 1.5[10⁻⁶/K], and a thermal expansion coefficient of the pendulum device 910 was 0.5[10⁻⁶/K]. It can be seen in FIG. 9 that an absolute value of a bias temperature coefficient of the prior art accelerometer 900a was 9.15[µG/K] but an absolute value of the bias temperature coefficient of the accelerometer 100a of the embodiment was 1.70[µG/K], and the latter value was 20% or less of the former value. It can be seen from this experiment that, compared to the prior art accelerometer 900a, the accelerometer 100a of the embodiment has a sufficiently small bias temperature coefficient.

The only difference between the accelerometer 100a of the embodiment and the prior art accelerometer 900a is in positions where the base 930 and the pendulum stand 920 are fastened to each other by the two screws 938. Accordingly, the accelerometer 100a of this embodiment is superior because it achieves an excellent effect of reduced bias temperature coefficient simply by changing the fastening positions of the base 930 and the pendulum stand 920 with the two screws 938 on the prior art accelerometer 900a. This advantage is achieved without introducing disadvantages such as fundamental design changes, increased size, increased weight, increased number of components, or increased manufacturing costs.

The reason why the accelerometer 100a of the embodiment has a superior bias temperature coefficient is considered to be as follows.

A cause for zero acceleration bias is application, to the pendulum 911, of stress generated by strain in the pendulum supporter 913 caused due to a change in environmental temperature. Generally, each of the pendulum device 910, the pendulum stand 920, and the base 930 is made of an isotropic material. This means each possesses the property of isotropically thermally expanding in a plane having a normal parallel to a direction in which the pendulum 911 can swing (the Z-direction in the accelerometer 100a shown in FIG. 6). Accordingly, in the case where there are no restricting conditions, each of the pendulum device 910, the pendulum stand 920, and the base 930 isotropically thermally expands according to a change in environmental temperature.

However, in reality, there are restricting conditions. The restricting conditions for the prior art accelerometer 900a are as follows; (A) a thermal restricting condition where α_{P} < α_{S} < α_{B} is established among the thermal expansion coefficient α_{P} of the pendulum device 910, the thermal expansion coefficient α_{S} of the pendulum stand 920, and the thermal expansion coefficient α_{B} of the base 930, and (B) a mechanical restricting condition (i.e., a restraint condition) where the angle between the direction D₁₂ (connecting the two attachment points of the pendulum stand 920 and the pendulum supporter 913) and the direction D₂₃ (connecting the two attachment points of the base 930 and the pendulum stand 920) is zero degrees. Due to the restricting conditions between the pendulum stand 920 and the pendulum supporter 913, the pendulum supporter 913 is not isotropically strained. More specifically, due to thermal expansion of the pendulum stand 920, the pendulum supporter 913 experiences greater strain in the direction D₁₂ , and less strain in a direction orthogonal to the direction D₁₂, compared to when no restricting conditions are present. Furthermore, due to the restricting conditions between the base 930 and the pendulum stand 920, the pendulum stand 920 is not isotropically strained. More specifically, due to thermal expansion of the base 930, the pendulum stand 920 experiences greater strain in the direction D₂₃, and less strain in a direction orthogonal to the direction D₂₃, compared to when no restricting conditions are present. Since the angle between the direction D₁₂ and the direction D₂₃ is zero degrees, the strain in the former case is compounded by the strain in the latter case. Consequently, the pendulum supporter 913 experiences significantly greater strain in the direction D₁₂ and less strain in the direction orthogonal to the direction D₁₂, compared to when no restricting conditions are present. As a result, great stress caused by significantly great strain in the pendulum supporter 913 is applied to the pendulum 911.

By contrast, the restricting conditions for the accelerometer 100a of the embodiment are as follows; (A) a thermal restricting condition where α_{P} < α_{S} < α_{B} is established among the thermal expansion coefficient α_{P} of the pendulum device 910, the thermal expansion coefficient α_{S} of the pendulum stand 920, and the thermal expansion coefficient α_{B} of the base 930, and (B) a mechanical restricting condition (i.e., a restraint condition) where the angle between the direction D₁₂ (connecting the two attachment points of the pendulum stand 920 and the pendulum supporter 913) and the direction D₂₃ (connecting the two attachment points of the base 930 and the pendulum stand 920) is 90 degrees. Due to the restricting conditions between the pendulum stand 920 and the pendulum supporter 913, the pendulum supporter 913 is not isotropically strained. More specificall, due to thermal expansion of the pendulum stand 920, the pendulum supporter 913 experiences greater strain in the direction D₁₂, and less strain in the direction orthogonal to the direction D₁₂, compared to when no restricting conditions are present. Furthermore, due to the restricting conditions between the base 930 and the pendulum stand 920, the pendulum stand 920 is not isotropically strained. More specifically, due to thermal expansion of the base 930, the pendulum stand 920 experiences greater strain in the direction D₂₃, and less strain in the direction orthogonal to the direction D₂₃, compared to when no restricting conditions are present. However, since an angle θ between the direction D₁₂ and the direction D₂₃ is 90 degrees, the strain in the former case is alleviated by the strain in the latter case. This makes the strain in the pendulum supporter 913 more akin to isotropic strain. Consequently, the small strain in the pendulum supporter 913 imparts only a sufficiently small stress to the pendulum 911, thereby reducing the zero acceleration bias.

### <Analysis Result 1>

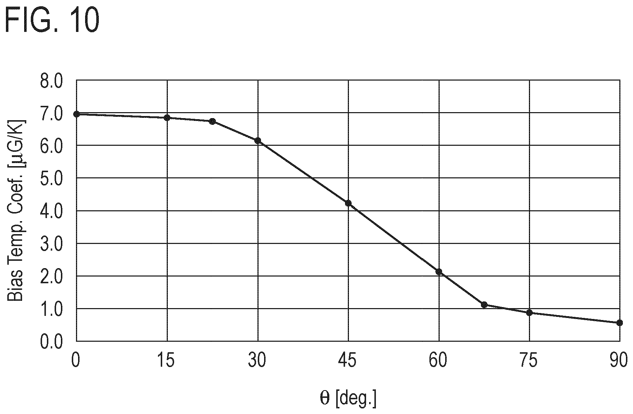

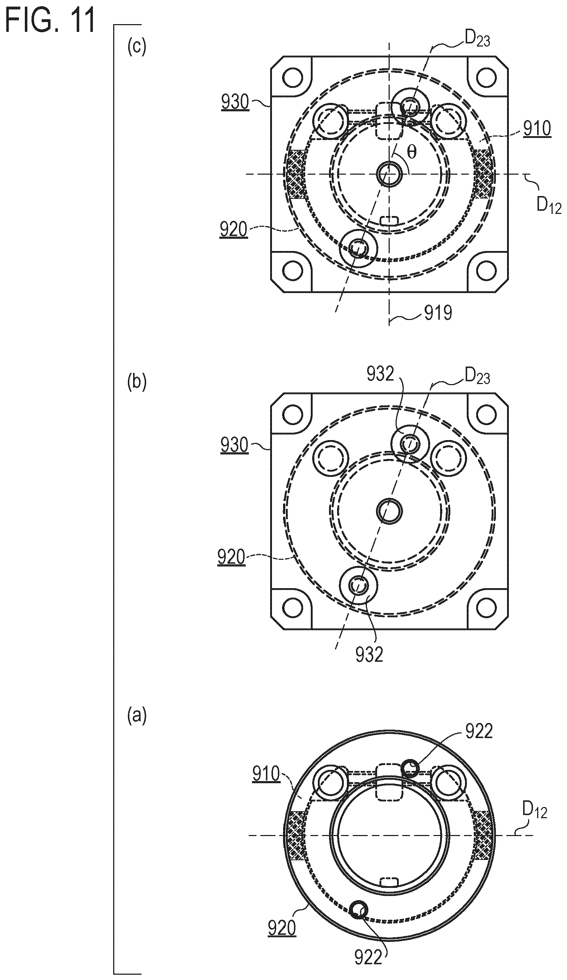

FIG. 10 shows the results of a thermal stress analysis for the relationship between the angle θ [deg.] (formed by the directions D₁₂ and D₂₃) and the absolute value of the bias temperature coefficient [µG/K]. In the analysis, the direction D₁₂ is orthogonal to the symmetrical axis 919. It can be seen in FIG. 10 that in the case where the angle θ between the directions D₁₂ and D₂₃ is greater than zero degrees, an accelerometer having a smaller bias temperature coefficient compared to the related art (6.96[µG/K] at θ = 0[deg.]) is achieved, and moreover, in the range where the angle θ between the directions D₁₂ and D₂₃ is equal to or greater than 22.5 degrees and equal to or smaller than 90 degrees, an accelerometer having a more desirable bias temperature coefficient (6.73[µG/K] at θ = 22.5[deg.], 0.57[µG/K] at θ = 90[deg.]) compared to the related art (6.96[µG/K] at θ = 0[deg.]) is achieved. That is, the accelerometer of the present disclosure can adopt the internal structure shown in FIG. 11, or other internal structures, not limited to the one shown in FIG. 8.

### <Analysis Result 2>

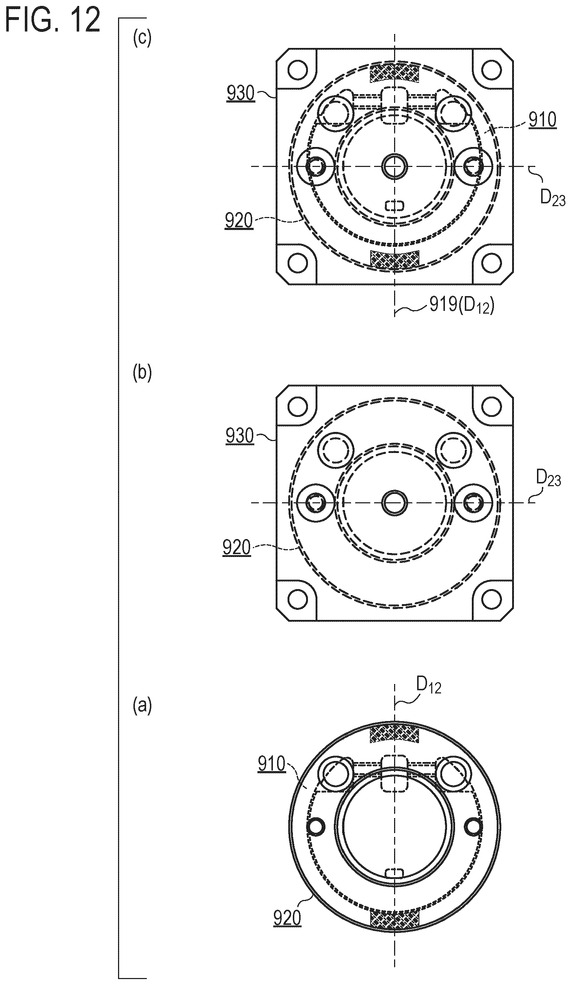

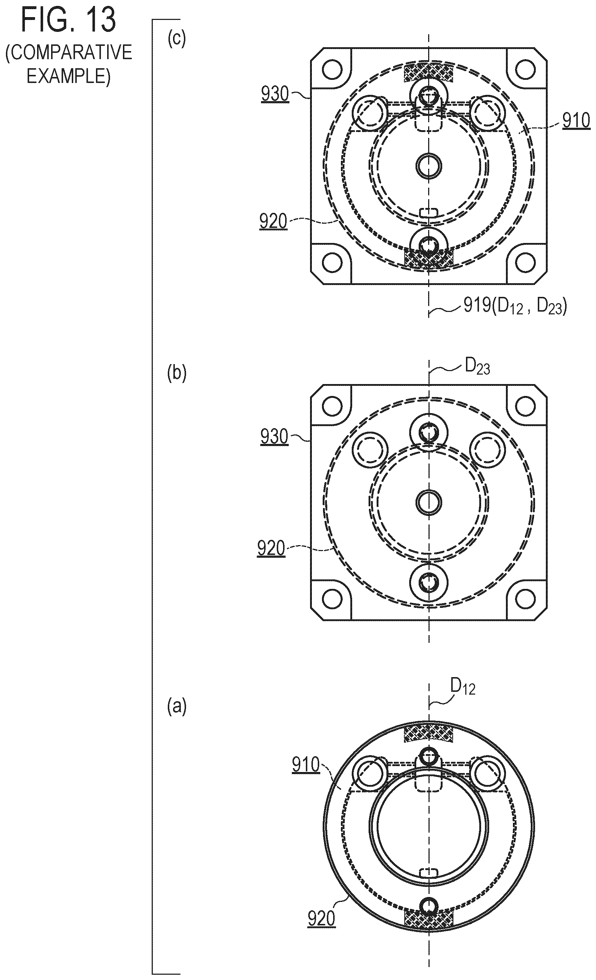

The absolute value of the bias temperature coefficient, as determined by a thermal stress analysis of an accelerometer (see FIG. 12), is 4.29[µG/K]. The accelerometer (see FIG. 12) has the same structure as the prior art accelerometer 900a except that the junction points of the pendulum device 910 and the pendulum stand 920 are on the symmetrical axis 919. Additionally, as a comparative example that is not an embodiment, the absolute value of the bias temperature coefficient, as determined by a thermal stress analysis of an accelerometer (see FIG. 13), is 29.49[µG/K]. The accelerometer (see FIG. 13) has the same structure as the accelerometer 100a of the embodiment except that the junction points of the pendulum device 910 and the pendulum stand 920 are on the symmetrical axis 919. It can be seen from the analysis results that, in the case where an accelerometer includes a stress relief mechanism characterized by misalignment between the directions D₁₂ and D₂₃, the junction points between the pendulum stand 920 and the pendulum supporter 913 are not limited to be the positions that are farthest from the symmetrical axis 919 of the pendulum device 910 in the direction orthogonal to the symmetrical axis 919.

### <Supplement 1>

The technical features disclosed in the various embodiments and modifications thereof described above are not necessarily mutually exclusive. As long as there is no contradiction from a technical point of view, technical features of a certain embodiment or a modification thereof may be applied to technical features of another embodiment or a modification thereof.

The claims recited in "Claims" as originally filed do not necessarily exhaustively and comprehensively claim all the inventions disclosed in this specification. In this regard, it should not be understood or construed that the applicant of the present application has waived, prior to filing of the present application, his right to the grant of patents for inventions which are not claimed at the time of filing the present application. As long as the laws or treaties of countries or districts which have accepted the filing of the present application permit, the applicant of the present application reserves a right to the grant of patents for inventions which are not claimed in the present application, a right to file divisional applications for the inventions, and a right to claim the inventions by amendments, and all other rights. This shall not apply if the applicant of the present application has clearly and definitively expressed an opposing intention.

An example of a summary of the present disclosure based on other aspects is as follows.

An accelerometer according to a first aspect is
an accelerometer comprising:
a pendulum device as a single component, the pendulum device including a pendulum and a pendulum supporter connected to the pendulum, and the pendulum device being structured such that the pendulum is swingable around a junction, serving as a fixed fulcrum, where the pendulum is connected to the pendulum supporter;
a pendulum stand as a single component, the pendulum stand being attached, at two attachment points on the pendulum stand, to the pendulum supporter in a manner not obstructing swinging of the pendulum; and
a base as a single component, the base being attached, at two attachment points on the base, to the pendulum stand, and the base and the pendulum device being arranged opposite each other across the pendulum stand, wherein
the base has a thermal expansion coefficient larger than a thermal expansion coefficient of the pendulum stand,
the thermal expansion coefficient of the pendulum stand is larger than a thermal expansion coefficient of the pendulum device, and
an angle between a direction connecting the two attachment points of the pendulum stand and the pendulum supporter and a direction connecting the two attachment points of the base and the pendulum stand is greater than zero degrees.

An accelerometer according to a second aspect is the accelerometer according to the first aspect, wherein the angle is equal to or greater than 22.5 degrees and equal to or smaller than 90 degrees.

An accelerometer according to a third aspect is the accelerometer according to the first or second aspect, wherein
the pendulum device has a line-symmetric shape with a symmetrical axis, and
the two attachment points of the pendulum stand and the pendulum supporter are positions farthest from the symmetrical axis of the line-symmetric shape in a direction orthogonal to the symmetrical axis.

An accelerometer according to a fourth aspect is the accelerometer according to any one of the first to third aspects, wherein
the pendulum stand is attached to the pendulum supporter with adhesive, and
the base is attached to the pendulum stand by two screws.

An accelerometer according to a fifth aspect is the accelerometer according to any one of the first to fourth aspects, wherein
the pendulum device has a property of isotropically thermally expanding in a plane having a normal parallel to a direction in which the pendulum can swing,
the pendulum stand has a property of isotropically thermally expanding in the plane, and
the base has a property of isotropically thermally expanding in the plane.

An accelerometer according to a sixth aspect is the accelerometer according to any one of the first to fifth aspects, wherein
the pendulum device is made essentially of silicon dioxide,
the pendulum has a flat plate shape, and
the pendulum supporter has a flat plate frame shape surrounding the pendulum.

An accelerometer according to a seventh aspect is the accelerometer according to any one of the first to sixth aspects, wherein
the accelerometer further comprises a permanent magnet and a torquer coil,
the pendulum stand is made essentially of a ferromagnetic material, and has a shape of a cylinder having an inner space,
the permanent magnet is positioned inside the inner space of the pendulum stand,
the torquer coil is attached to the pendulum, and
the accelerometer is a servo accelerometer.

### <Supplement 2>

Although the present invention has been described with reference to illustrative embodiments, those skilled in the art will appreciate that various changes can be made and components thereof can be replaced by equivalents without departing from the scope of the invention. Further, many modifications may be made to adapt a particular system, device, or components thereof to the teachings of the present invention without departing from the essential scope thereof. Therefore, the present invention is not limited to the particular embodiments disclosed to implement the present invention, but is intended to include all embodiments falling within the scope of the appended claims.

Further, the use of terms such as "first" and "second" does not imply any order or importance, but the terms such as "first" and "second" are used to distinguish elements from one another. The terminology used in the present specification is for the purpose of describing the embodiments, and is not intended to limit the present invention in any way. The term "comprising" and conjugations thereof, when used in the present specification and/or in the appended claims, clarify the presence of the mentioned features, steps, operations, elements and/or components, but does not exclude the presence or addition of one or more other features, steps, operations, elements, components and/or groups thereof. The term "and/or" includes any and all combinations of one or more of the associated listed elements, if any. In the claims and the specification, unless stated otherwise, words such as "connect", "couple", "join", "link" or synonyms thereof, and all word forms thereof do not necessarily deny the existence of one or more intermediate elements between two elements that are "connected" or "coupled" to each other or "linked" to each other, for example.

Unless defined otherwise, all terms (including technical and scientific terms) used in the present specification have the same meaning as generally understood by those skilled in the art to which the present invention belongs. Further, terms such as those defined in generally used dictionaries should be construed to have meanings consistent with their meanings in the related art and the context of the present disclosure, and they should not be construed ideally or overly formally unless explicitly defined.

It will be appreciated that a number of techniques and steps are disclosed in the description of the present invention. Each of these has individual advantages, and each can also be used in combination with one or more, or even all, of the other disclosed techniques. Therefore, in order to avoid complication, the present specification refrains from describing every possible combination of individual techniques or steps. Nevertheless, the present specification and claims should be read with the understanding that such combinations are fully within the scope of the present invention and claims.

Corresponding structures, materials, acts and equivalents of all functional elements coupled with means or steps in the claims recited below, if any, are intended to include structures, materials, or acts for implementing functions in combination with other claimed elements.

Although the embodiments of the present invention have been described above, the present invention is not limited to these embodiments. Various changes and modifications may be made without departing from the gist of the present invention. The embodiments selected and described are for the purpose of illustrating the principles of the present invention and its practical application. The present invention may be used as various embodiments with various changes or modifications, and the various changes or modifications are determined according to the expected use. All such changes and modifications are intended to be included within the scope of the present invention defined by the appended claims, and it is intended that when they are construed in accordance with the breadth to which they are impartially, lawfully and justly given, the same protection is given to them.

## Claims

1. An accelerometer comprising:
a pendulum device as a single component, the pendulum device including a pendulum and a pendulum supporter connected to the pendulum, and the pendulum device being structured such that the pendulum is swingable around a junction, serving as a fixed fulcrum, where the pendulum is connected to the pendulum supporter;
a pendulum stand as a single component, the pendulum stand being attached, at two attachment points on the pendulum stand, to the pendulum supporter in a manner not obstructing swinging of the pendulum; and
a base as a single component, the base being attached, at two attachment points on the base, to the pendulum stand, and the base and the pendulum device being arranged opposite each other across the pendulum stand, wherein
the base has a thermal expansion coefficient larger than a thermal expansion coefficient of the pendulum stand,
the thermal expansion coefficient of the pendulum stand is larger than a thermal expansion coefficient of the pendulum device, and
an angle between a direction connecting the two attachment points of the pendulum stand and the pendulum supporter and a direction connecting the two attachment points of the base and the pendulum stand is greater than zero degrees.

2. The accelerometer according to Claim 1, wherein the angle is equal to or greater than 22.5 degrees and equal to or smaller than 90 degrees.

3. The accelerometer according to Claim 1, wherein
the pendulum device has a line-symmetric shape with a symmetrical axis, and
the two attachment points of the pendulum stand and the pendulum supporter are positions farthest from the symmetrical axis of the line-symmetric shape in a direction orthogonal to the symmetrical axis.

4. The accelerometer according to Claim 1, wherein
the pendulum stand is attached to the pendulum supporter with adhesive, and
the base is attached to the pendulum stand by two screws.

5. The accelerometer according to Claim 1, wherein
the pendulum device has a property of isotropically thermally expanding in a plane having a normal parallel to a direction in which the pendulum can swing,
the pendulum stand has a property of isotropically thermally expanding in the plane, and
the base has a property of isotropically thermally expanding in the plane.

6. The accelerometer according to Claim 1, wherein
the pendulum device is made essentially of silicon dioxide,
the pendulum has a flat plate shape, and
the pendulum supporter has a flat plate frame shape surrounding the pendulum.

7. The accelerometer according to Claim 1, wherein
the accelerometer further comprises a permanent magnet and a torquer coil,
the pendulum stand is made essentially of a ferromagnetic material, and has a shape of a cylinder having an inner space,
the permanent magnet is positioned inside the inner space of the pendulum stand,
the torquer coil is attached to the pendulum, and
the accelerometer is a servo accelerometer.
